# EUROPÄISCHE PATENTSCHRIFT

(11) **EP 0 530 841 B1**
(45) Veröffentlichungstag und Bekanntmachung des Hinweises auf die Patenterteilung: **15.04.1998**
(21) Anmeldenummer: 92115285.6
(22) Anmeldetag: 07.09.1992
(51) Int. Cl.: B62D 51/02, B60P 1/04, B62D 7/02

(54) **Fahrzeug**
Vehicle
Véhicule

(30) Priorität: 06.09.1991 DE 9111061 U
(43) Veröffentlichungstag der Anmeldung: 10.03.1993
(73) Patentinhaber: Veit, Gustav, D-88662 Bonndorf (DE)
(72) Erfinder: Veit, Gustav, D-88662 Bonndorf (DE)
(74) Vertreter: Weiss, Peter, Dr. rer.nat.

(56) Entgegenhaltungen:
- DE-A- 1 555 691
- DE-A- 1 923 341
- DE-U- 1 753 087
- DE-U- 1 836 913
- DE-U- 1 859 922
- FR-A- 1 357 729
- FR-A- 2 307 692

## Beschreibung

Die Erfindung betrifft ein Fahrzeug zum Transport von Lasten, beispielsweise im Obst- und Gemüseanbau oder im kommunalen Bereich, mit einem Grundrahmen zur Aufnahme der Lasten, zwei Radachsen und einem Antriebsaggregat, sowie einem Lenkrad, welches in Fahrtrichtung hinter dem Grundrahmen angeordnet ist.

Derartige Fahrzeuge sind als Kleinlastfahrzeuge in vielfältiger Form auf dem Markt und bekannt. Im Obst- und Gemüseanbau werden beispielsweise beladene Anhänger von Einachsern, Zweiachsern oder kleinen Schleppern gezogen. Gerade aber bei unübersichtlichem Gelände bzw. in Obst- und Gemüsekulturen wirkt sich die mangelnde Übersichtlichkeit beim Fahren mit derartigen Fahrzeugen sehr negativ aus.

In der US-A 2 494 725 ist ein Fahrzeug beschrieben, welches ein Lenkrad mit Antrieb aufweist. Dabei steht der Bediener auf der Ladefläche, um das Fahrzeug zu lenken und zu betätigen. Das Lenkrad mit Antrieb ist vor der Ladefläche in Fahrtrichtung angeordnet, wobei der Bediener beim Vorausfahren die Ladefläche nicht überblicken kann.

Ferner ist in der DE-A 24 94 725 ein Elektrofahrzeug offenbart, welches einen Behälter aufweist, der wesentlich über den Rand bzw. den beiden Achsen des Fahrzeuges angeordnet ist. Dabei ist das Lenkrad in Fahrtrichtung hinter dem Grundrahmen angeordnet, wobei das vordere Rad zur Steuerung und Lenkung des Elektrofahrzeuges vorgesehen ist. Nachteilig an diesem Elektrofahrzeug ist, daß dieses äußerst aufwendig und komplex gebaut ist und nicht für eine Aufnahme von großräumigen, sperrigen und platzeinnehmenden Waren geeignet ist.

Für kommunale Zwecke werden in der Regel viel zu groß dimensionierte Fahrzeuge eingesetzt, welche nicht nur in der Anschaffung sehr teuer, sondern auch im Unterhalt sehr aufwendig sind.

Ein o.g. Fahrzeug ist aus der DE-A 15 55 691 bekannt. Dort weist ein Transportfahrzeug zum Transport von Lasten einen Grundrahmen zur Aufnahme dieser Lasten auf, zwei Radachsen und ein Antriebsaggregat sowie Lenkholme, welche in Fahrtrichtung hinter dem Grundrahmen angeordnet sind.

Aufgabe der vorliegenden Erfindung ist es, Stabilität und Lastkapazität dieses bekannten Fahrzeuges zu verbessern.

Zur Lösung dieser Aufgabe führt, daß der Grundrahmen tiefer als die Radachsen und zwischen beiden liegt und an dem Grundrahmen stirnwärtig und rückwärtig jeweils ein Stirnrahmen aufragt, wobei der Grundrahmen seitlich kippbar ausgestaltet ist.

Diese Ausgestaltung bedeutet, daß der Fahrer dieses Fahrzeuges beispielsweise in Obst- und Gemüsekulturen wesentlich leichter steuern und Kurven wesentlich besser angehen kann. Durch eine entsprechende Getriebeanordnung ist es möglich, daß das Fahrzeug auch um sich selbst drehen kann. Da der Fahrer zudem den Grundrahmen für die Lastaufnahme vor sich hat, wird ihm eine bessere und übersichtlichere Fahrmöglichkeit an die Hand gegeben.

Im übrigen sollte der Fahrer bevorzugt bei diesem Fahrzeug nicht sitzen, sondern auf einer Stehplatte hinter dem Lenkrad stehen. Hierdurch wird das Ab- und Aufsteigen beschleunigt. Zudem kann der Fahrer sich auf der Stehplatte besser drehen und nach hinten ausrichten. Dies ist vor allem dann wichtig, wenn mit dem Fahrzeug eine Vielzahl weiterer Anhänger mitgeführt wird. Zu diesem Zweck ist im übrigen an der Stehplatte eine Anhängerkupplung vorgesehen.

Im vorliegenden Ausführungsbeispiel ist die Stehplatte mit dem Grundrahmen bzw. mit einem von dem Grundrahmen aufragenden Stirnrahmen über einen Radkasten verbunden. In diesem Radkasten befindet sich eine Radachse, wobei dies beispielweise die angetriebene Radachse sein kann. In diesem Fall sitzt dann dem Radkasten auch das Antriebsaggregat auf und ist über entsprechende Getriebeelemente mit der Radachse verbunden. Mit dieser Ausführungsform kann ein kompakter Antrieb erfolgen, so daß keine langen Steuerleitungen oder Antriebswellen notwendig werden.

Im Rahmen der Erfindung liegt aber auch, daß beispielsweise die andere Radachse angetrieben wird und dann das Antriebsaggregat näher an dieser Radachse angeordnet ist. Ferner ist auch ohne weiteres ein Vierradantrieb denkbar und soll von der vorliegenden Erfindung umfaßt werden.

Möglich ist die Lenkung der angetriebenen Radachse. Bevorzugt wird allerdings eine Lenkung der in Fahrtrichtung vor dem Grundrahmen angeordneten Radachse. In diesem Falle ist diese Radachse drehbar angeordnet oder ist als Lenkachse ausgebildet. Beispielsweise kann die Lenkung auch mittels einer entsprechenden Drehwelle an einem weiteren Rad erfolgen. Dieser Rahmen steht dann mit dem Grund- rahmen wiederum in Verbindung.

Für die Verbindung zwischen Lenkrad und drehbarer Radachse gibt es viele Möglichkeiten. Die einfachste ist diejenige über entsprechende Zahnräder und Antriebsriemen. Deshalb wird sie bei der vorliegenden Erfindung bevorzugt.

Der Rahmen, an dem die lenkbare Radachse hängt, kann ferner zusätzlich noch als Stellfläche für Kisten od. dgl. ausgebildet sein. Damit diese nicht verrutschen, ist der Rahmen mit einem umlaufenden Seitenstreifen versehen. Damit wird im übrigen auch ein Befüllen dieser Kisten erleichtert, da sich Pflückpersonal beispielsweise nicht zu der Kiste hinabbücken muß. Deshalb soll der Rahmen höher als der Grundrahmen liegen, der erfindungsgemäß dem Tragen von größeren Kisten dient.

Ferner ist daran geacht, daß der Grundrahmen höhenverstellbar ist. Dies kann durch mechanische oder hydraulische Achsschwingen erfolgen oder durch Abstützungen gegenüber den Achsen. Diese Ausführungsform ist vor allem bei Kulturen wünschenswert.

Die kippbare Ausgestaltung des Grundrahmens ist insbesondere beim Befüllen von größeren Kisten vorteilhaft, da zum einen das Befüllen selbst erleichtert ist und zum anderen auch der Füllgrad der Kiste erhöht werden kann.

In dem bevorzugten Ausführungsbeispiel soll der Grundrahmen um ein Zentralrohr kippbar sein, wobei dieses Zentralrohr in Fahrtrichtung verläuft. Der Einfachheit halber greifen dabei in das Zentralrohr von beiden Seiten, d.h., von den Stirnrahmen des Fahrzeuges Rohrabschnitte in das Zentralrohr ein, so daß dieses Zentralrohr im Verhältnis zu den Rohrabschnitten beim Kippen dreht.

Der Festlegung des Grundrahmens in einer bestimmten Kippstellung dient dabei der Einfachheit halber eine mit dem Grundrahmen fest verbundene Lasche, welche aufragt und einer mit dem Stirnrahmen fest verbundenen Platte anliegt. Die Lasche weist dabei eine Bohrung auf, welche in einer bestimmten Kippstellung mit entsprechenden Bohrungen in der Platte übereinstimmt. Durch diese Bohrungen wird dann ein entsprechender Riegelbolzen eingesetzt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine perspektivische Ansicht eines erfindungsgemäßen Fahrzeuges für den Obst- und Gemüseanbau;
Fig. 2 eine Seitenansicht des erfindungsgemäßen Fahrzeugs gem. Fig. 1;
Fig. 3 eine Draufsicht auf das Fahrzeug gem. Fig. 2.
Fig. 4 einen Querschnitt durch ein weiteres Ausführungsbeispiel eines erfindungsgemäßen Fahrzeuges.

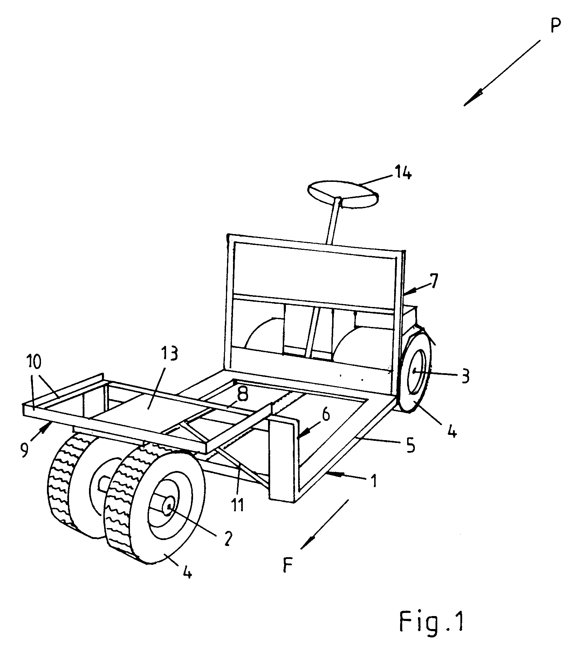

Ein erfindungsgemäßes Fahrzeug P, welches bevorzugt im Obst- und Gemüseanbau Verwendung finden soll, weist gem. Fig. 1 einen Grundrahmen 1 auf, der zwischen zwei Radachsen 2 und 3 mit entsprechenden Rädern 4 angeordnet ist. Der Grundrahmen 1 besteht dabei aus einem mittleren, tiefer liegenden Tragrahmen 5, von dem jeweils stirnwärtig und rückwärtig ein Stirnrahmen 6 bzw. 7 aufragt. Dabei ist der Grundrahmen 1 zusammen mit den Stirnrahmen 6 bzw. 7 so ausgestaltet, daß auf ihn zwischen die beiden Stirnrahmen 6 und 7 eine entsprechende, genormte Transportkiste aufgesetzt werden kann. Da keine seitenrahmen vorhanden sind, kann diese Transportkiste auf einfache Weise von der Seite her beispielsweise mit einem entsprechenden Gabelstapler eingesetzt werden.

Der in Fahrtrichtung F angeordnete Stirnrahmen 6 ist im vorliegenden Ausführungsbeispiel mit einer wesentlich geringeren Höhe ausgebildet, als der Stirnrahmen 7. Von einem oberen Holm 8 des Stirnrahmens 6 kragt ein weiterer Rahmen 9 ab, auf den in Gebrauchslage des Fahrzeuges P beispielsweise eine Obstkiste od.dgl. aufgestellt werden kann. Damit diese bei Fahrt des Fahrzeuges P nicht verrutscht, umlaufen den Rahmen 9 Seitenstreifen 10. Der Rahmen 9 übergreift im übrigen die Radachse 2 mit den Rädern 4 und ist zur Erhöhung seiner Tragfähigkeit über Stützstreben 11 gegen den Grundrahmen 1 abgestützt.

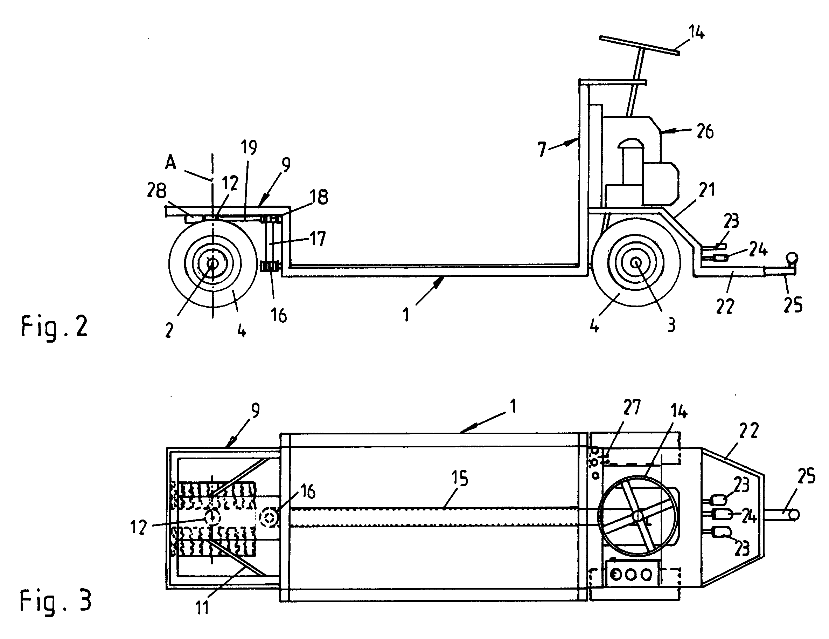

Die Radachse 2 ist im übrigen als Drehachse A ausgebildet, so daß sie die Kurvenfahrt des Fahrzeuges P bestimmt. Hierzu ragt von der Radachse 2 eine Drehwelle 12 (s. Fig. 2 und 3) nach oben und ist an dem Rahmen 9 bzw. einer Mittelplatte 13 festgelegt, wobei die Drehwelle 12 um die Drehachse A drehen kann.

Die Drehung der Drehwelle 12 um die Drehachse A wird mittels eines Lenkrades 14 bewirkt, welches sich hinter dem Stirnrahmen 7 befindet. Über dieses Lenkrad 14 kann ein Antriebsriemen 15, beispielsweise eine Kette, bewegt werden, welche mit einem Zahnrad 16 unterhalb des Rahmens 9 in Verbindung steht. Von dem Zahnrad 16 erfolgt die Übertragung der Lenkbewegung über eine Zwischenwelle 17 auf ein weiteres Zahnrad 18, welches an der Unterseite der Mittelplatte 13 drehbar befestigt ist. Dieses Zahnrad 18 steht wiederum über einen Antriebsriemen 19 mit einem Zahnrad 20 in Verbindung, welches der Drehwelle 12 drehfest aufgesetzt ist.

Gegenüber der Radachse 2 befindet sich nach dem Stirnrahmen 7 die Radachse 3, ebenfalls mit Rädern 4. Diese Räder 4 sind zumindest teilweise von einem Radkasten 21 überdeckt, von dem nach hinten eine Stehplatte 22 abragt. Eine Bedienperson kann auf diese Stehplatte 22 treten und entsprechende Kupplungshebel 23 bzw. einen Bremshebel 24 betätigen. Nach hinten schließt an diese Stehplatte 22 noch eine Anhängekupplung 25 für das Anhängen von mit dem Fahrzeug P zu ziehenden Ladewägen für Obst und Gemüse an.

Auf dem Radkasten 21 sitzt ein nur schematisch dargestelltes Antriebsaggregat 26 auf, beispielsweise ein handelsüblicher Benzinmotor. Mittels dieses Antriebsaggregates 26 wird die Radachse 3 über ein nicht näher gezeigtes Getriebe angetrieben. Die Steuerung der Geschwindigkeit des Antriebsaggregates 26 und die Umschaltung von Vorwärts- auf Rückwärtslauf erfolgt mit entsprechenden Steuerhebeln 27.

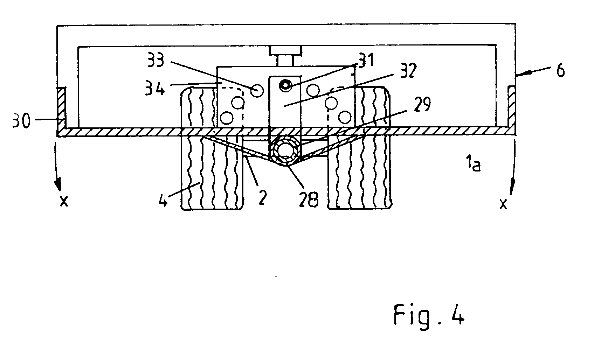

In Figur 4 ist gezeigt, daß der Grundrahmen 1a auch seitlich in Richtung x abkippbar ist. Hierzu ist der Grundrahmen 1a losgelöst von dem Stirnrahmen 6 und 7 und ist mit diesem gelenkig über ein Zentralrohr 28 verbunden, welches über entsprechenden von den Stirnrahmen 6 bzw. 7 abragenden Rohrabschnitten 29 aufgeschoben ist. Auf dem Zentralrohr 28 sitzt der Grundrahmen 1a auf, so daß das Zentralrohr 28 bei einem Kippen des Grundrahmens 1a gegenüber dem Rohrabschnitt 29 dreht.

Damit auf dem Grundrahmen 1a aufsitzende Kästen nicht bei einem Abkippen des Grundrahmens 1 a herunterutschen, umlaufen den Grundrahmen 1a Seitenstreifen 30.

Der Festlegung des Grundrahmens 1a in einer bestimmten Stellung dient der Einfachheit halber ein Bolzen 31, welcher zum einen eine Bohrung in einer Lasche 32 am Grundrahmen 1a durchsetzt und andererseits in Bohrungen 33 in einer Platte 34 an dem Stirnrahmen 6 eingreifen kann. Es versteht sich von selbst, daß sich auch an dem Stirnrahmen 7 eine entsprechende Platte 34 mit Bohrungen 33 befindet, welche ebenfalls mittels eines Bolzens mit einer entsprechenden Lasche an dem Grundrahmen 1a zusammenwirkt.

## Patentansprüche

1. Fahrzeug zum Transport von Lasten, beispielsweise im Obst- und Gemüseanbau oder im kommunalen Bereich, mit einem Grundrahmen (1, 1a) zur Aufnahme der Lasten, zwei Radachsen (2, 3) und einem Antriebsaggregat (26), sowie einem Lenkrad (14), welches in Fahrtrichtung hinter dem Grundrahmen (1, 1a) angeordnet ist,
dadurch gekennzeichnet,
daß der Grundrahmen (1, 1a) tiefer als die Radachsen (2, 3) und zwischen beiden liegt und an dem Grundrahmen (1, 1a) stirnwärtig und rückwärtig jeweils ein Stirnrahmen (6 und 7) aufragt, wobei der Grundrahmen (1a) seitlich kippbar ausgestaltet ist.

2. Fahrzeug nach Anspruch 1, dadurch gekennzeichnet, daß der Grundrahmen (1a) über ein Zentralrohr (28) mit Rohrabschnitten (29) am Stirnrahmen (6 und 7) verbunden ist, wobei das Zentralrohr (28) um die Rohrabschnitte dreht.

3. Fahrzeug nach Anspruch 1 oder 2, dadurch gekennzeichnet, daß vom Grundrahmen (1a) eine Lasche (32) aufragt, welche in einer vorbestimmten Position des Grundrahmens (1a) im Verhältnis zu einer Platte (34) am Stirnrahmen (6, 7) mittels eines Bolzens festgelegt ist.

4. Fahrzeug nach einem der Ansprüche 1 - 3, dadurch gekennzeichnet, daß das Lenkrad (14) mit der in Fahrtrichtung (F) vor dem Grundrahmen (1) angeordneten Radachse (2) verbunden ist.

5. Fahrzeug nach Anspruch 4, dadurch gekennzeichnet, daß die Radachse (2) über eine Drehwelle (12) an einem von dem Grundrahmen (1) abragenden Rahmen (9) bzw. einer Mittelplatte (13) um die Drehachse (A) festgelegt ist.

6. Fahrzeug nach Anspruch 5, dadurch gekennzeichnet, daß der Drehwelle (12) ein Zahnrad (20) aufgesetzt ist, welches über einen Antriebsriemen (19), ein weiteres Zahnrad (18) unter der Mittelplatte (13), eine Zwischenwelle (17), ein Zahnrad (16) sowie einen weiteren Antriebsriemen (15) mit dem Lenkrad (14) in Verbindung steht.

7. Fahrzeug nach Anspruch 5 oder 6, dadurch gekennnzeichnet, daß der Rahmen (9) zur Aufnahme von Lasten mit umlaufenden Seitenstreifen (10) versehen ist.

8. Fahrzeug nach Anspruch 7, dadurch gekennzeichnet, daß der Grundrahmen (1, 1a) tiefer als der Rahmen (9) liegt.

## Claims

1. Vehicle for the transport of loads, for example in the cultivation of fruits and vegetables or in the communale area, with a base frame (1, 1a) for supporting the loads, two axletrees (2, 3) and a drive unit (26) as well as a steering wheel (14) being arranged in driving direction behind the base frame (1, 1a),
characterized in that
the base frame (1, 1a) is lying lower than the axletrees (2, 3) and between said axletrees and that a front frame (6 and 7) rises at the front side respectively and at the back side from the base frame (1, 1a), wherein the base frame (1, 1a) is sideways tiltable.

2. Vehicle according to claim 1 characterized in that the base frame (1a) is connected via a central tube (28) with tube sections (29) at the front frame (6 and 7) via a central tube (28), wherein the central tube (28) is rotating around the tube sections.

3. Vehicle according to claim 1 or 2 characterized in that a strap (32) is rising from the base frame (1a), being fixed through a bolt in a predetermined position of the base frame (1a) in relation to a plate (34) at the front frame (6, 7).

4. Vehicle according to with one of the claims 1 - 3 characterized in that the steering wheel (14) is connected with the axletree (2) being arranged in driving direction (F) before the base frame (1).

5. Vehicle according to claim 4 characterized in that the axletree (2) is mounted to a frame (9) or a middle plate (13) respectively via a rotation shaft (12) around the rotation axis (A), said frame (9) rising from the base frame (1).

6. Vehicle according to claim 5 characterized in that a gearwheel (20) is placed upon the rotation shaft (12), said gearwheel (20) being connected with the steering wheel (4), by means of a driving belt (19), another gearwheel (18) under the middle plate (13), an intermediate shaft (17), a gearwheel (16) and further another driving belt (15).

7. Vehicle according to claim 5 or 6 characterized in that the frame (9) for supporting loads is provided with surrounding side stripes (10).

8. Vehicle according to claim 7 characterized in that the base frame (1, 1a) is lying lower than the frame (9).

## Revendications

1. Véhicule de transport de charges, par exemple pour la collecte de fruits ou de légumes ou pour des services municipaux, comprenant un cadre de base (1, 1a) servant à accueillir les charges, deux essieux à roues (2, 3), un groupe propulseur (26), ainsi qu'un volant de direction (14) situé derrière le cadre de base par rapport au sens de marche du véhicule,
caractérisé en ce que
le cadre de base (1, 1a) est situé plus bas que les essieux (2, 3) et entre deux cadres frontaux (6, 7) dépassant vers le haut, en avant et en arrière, le cadre de base est conçu pour pouvoir basculer latéralement.

2. Véhicule selon la revendication 1,
caractérisé en ce que
le cadre de base (1a) est relié par un tube central (28) à des éléments tubulaires (29) fixes sur les cadres frontaux (6, 7) et autour desquels peut tourner le tube central.

3. Véhicule selon la revendication 1 ou 2,
caractérisé en ce que
sur le cadre de base (1a) dépasse une patte (32) qui est fixée au moyen d'une broche, dans une position donnée du cadre de base par rapport à une plaque (34) fixée au cadre frontal (6, 7).

4. Véhicule selon une des revendications 1 à 3,
caractérisé en ce que
le volant de direction (14) est relié à l'essieu (2) situé en avant du cadre de base (1) par rapport au sens de marche du véhicule.

5. Véhicule selon la revendication 4,
caractérisé en ce que
l'essieu (2) est fixé par l'intermédiaire d'un arbre tournant (12) d'axe A, à un cadre (9) débordant le cadre de base (1) ou à une plaque (13) fixée au milieu du cadre (9).

6. Véhicule selon la revendication 5,
caractérisé en ce que
sur l'arbre tournant (12) est monté un pignon denté (20) relié au volant de direction (14) par une courroie de transmission (19), un autre pignon denté (18) situé sur la plaque médiane (13), un arbre intermédiaire (17), un pignon denté (16) ainsi qu'une autre courroie de transmission (15).

7. Véhicule selon une des revendications 5 ou 6,
caractérisé en ce que
le cadre (9) recevant les charges est équipé à sa périphérie de bandes latérales (10).

8. Véhicule selon la revendication 7,
caractérisé en ce que
le cadre de base (1, 1a) est situé plus bas que le cadre (9).
